# EUROPEAN PATENT APPLICATION

(11) **EP 4 387 320 A1**
(43) Date of publication of application: **19.06.2024**
(21) Application number: 22855403.6
(22) Date of filing: 08.08.2022
(51) Int. Cl.: H04W 28/02

(54) **METHOD FOR TRANSMITTING SERVICE FLOW BY MEANS OF MULTIPLE UES, AND DEVICE**

(30) Priority: 09.08.2021 CN 202110910563
(71) Applicant: Vivo Mobile Communication Co., Ltd., Dongguan, Guangdong 523863 (CN)
(72) Inventor: CHONG, Weiwei, Dongguan, Guangdong 523863 (CN); KE, Xiaowan, Dongguan, Guangdong 523863 (CN); WU, Xiaobo, Dongguan, Guangdong 523863 (CN); XIE, Zhenhua, Dongguan, Guangdong 523863 (CN)
(74) Representative: Murgitroyd & Company
(86) International application number: PCT/CN2022/110927
(87) International publication number: WO 2023/016422

(57) **Abstract**

Embodiments of this application disclose a method and an apparatus for transmitting a service flow through multiple UEs, and pertain to the field of communications technology. The method for transmitting a service flow through multiple UEs according to the embodiments of this application includes: determining, by a mobility management function, that a first session of a first UE and a second session of a second UE are used for transmission of a same service flow; and selecting, by the mobility management function, a same session management function for the first session and the second session.

## Description

### CROSS-REFERENCES TO RELATED APPLICATION

This application claims priority to Chinese Patent Application No. 202110910563.4, filed in China on August 09, 2021, which is incorporated herein by reference in its entirety.

### TECHNICAL FIELD

This application pertains to the field of communications technology, and specifically relates to a method and apparatus for transmitting a service flow through multiple user equipment (User Equipment, UE).

### BACKGROUND

Due to limited capability of a single UE, uplink data transmission is restricted, and data transmission requirements of high-bandwidth uplink services cannot be satisfied. Joint transmission of high-bandwidth uplink service over multiple air interfaces of multiple UEs can improve the data transmission bandwidth via multi-path transmission, without increasing the power consumption of a single UE. In addition, certain errors and failure risks exist in transmitting data through sessions of a single UE. Transmitting the same service data in a redundancy manner through sessions of multiple UEs helps improve the accuracy and success rate of data transmission.

In a scenario of joint transmission of a data flow over 3rd generation partnership project (3rd Generation Partnership Project, 3GPP) air interfaces of multiple UEs, how to enable a session management function to associate multiple sessions of multiple terminals for multi-UE transmission of a service flow is a technical problem that needs to be urgently solved in the related art.

### SUMMARY

Embodiments of this application provide a method and an apparatus for transmitting a service flow through multiple UEs, so as to solve the problem in the related art of being unable to associate multiple sessions of multiple UEs for multi-UE transmission of a service flow.

According to a first aspect, a method for transmitting a service flow through multiple UEs is provided, including: determining, by a mobility management function, that a first session of a first UE and a second session of a second UE are used for transmission of a same service flow; and selecting, by the mobility management function, a same session management function for the first session and the second session.

According to a second aspect, a method for transmitting a service flow through multiple UEs is provided, including: sending, by a second UE, a second session establishment request message, where the second session establishment request message is used for a mobility management function to determine that a first session of a first UE and a second session of the second UE are used for transmission of a same service flow, and to select a same session management function for the first session and the second session.

According to a third aspect, a method for transmitting a service flow through multiple UEs is provided, including: sending, by a session management function, registration information to a data management or storage function, so that a mobility management function serving a second UE obtains information of the session management function, where the session management function corresponds to a first session of a first UE, and the registration information includes an identifier of the session management function and at least one of the following: an identifier of the first UE, an identifier of the first session, a first UE aggregation group identifier, description information of a service flow corresponding to a multi-UE aggregation function, and data network name (Data Network Name, DNN) information.

According to a fourth aspect, an apparatus for transmitting a service flow through multiple UEs is provided, including: a determining module, configured to determine that a first session of a first UE and a second session of a second UE are used for transmission of a same service flow; and a selecting module, configured to select a same session management function for the first session and the second session.

According to a fifth aspect, an apparatus for transmitting a service flow through multiple UEs is provided, including: a sending module, configured to send a second session establishment request message, where the second session establishment request message is used for a mobility management function to determine that a first session of a first UE and a second session of the apparatus are used for transmission of a same service flow, and to select a same session management function for the first session and the second session.

According to a sixth aspect, an apparatus for transmitting a service flow through multiple UEs, including: a sending module, configured to send registration information to a data management or storage function, so that a mobility management function serving a second UE obtains information of the apparatus, where the apparatus corresponds to a first session of a first UE; where the registration information includes an identifier of the apparatus and at least one of the following: an identifier of the first UE, an identifier of the first session, a first UE aggregation group identifier, description information of a service flow corresponding to a multi-UE aggregation function, and DNN information.

According to a seventh aspect, a terminal is provided. The terminal includes a processor, a memory, and a program or instructions stored in the memory and executable on the processor. When the program or instructions are executed by the processor, the method according to the second aspect is implemented.

According to an eighth aspect, a terminal is provided, including a processor and a communication interface. The communication interface is configured to send a second session establishment request message, where the second session establishment request message is used for a mobility management function to determine that a first session of a first UE and a second session of a second UE are used for transmission of a same service flow, and to select a same session management function for the first session and the second session.

According to a ninth aspect, a network-side device is provided. The network-side device includes a processor, a memory, and a program or instructions stored in the memory and executable on the processor. When the program or instructions are executed by the processor, the method according to the first aspect or the third aspect is implemented.

According to a tenth aspect, a network-side device is provided, including a processor and a communication interface. The processor is configured to: determine that a first session of a first UE and a second session of a second UE are used for transmission of a same service flow, and select a same session management function for the first session and the second session; or the communication interface is configured to send registration information to a data management or storage function, so that a mobility management function serving a second UE obtains information of the session management function, where the session management function corresponds to a first session of a first UE, and the registration information includes an identifier of the session management function and at least one of the following: an identifier of the first UE, an identifier of the first session, a first UE aggregation group identifier, description information of a service flow corresponding to a multi-UE aggregation function, and DNN information.

According to an eleventh aspect, a readable storage medium is provided. The readable storage medium stores a program or instructions. When the program or instructions are executed by a processor, the method according to the first aspect, the second aspect, or the third aspect is implemented.

According to a twelfth aspect, a chip is provided. The chip includes a processor and a communication interface, where the communication interface is coupled to the processor, and the processor is configured to run a program or instructions to implement the method according to the first aspect, the second aspect, or the third aspect.

According to a thirteenth aspect, a computer program/program product is provided. The computer program/program product is stored in a non-transient storage medium, and the program/program product is executed by at least one processor to implement the method according to the first aspect, the second aspect, or the third aspect.

According to a fourteenth aspect, a method for transmitting a service flow through multiple UEs is provided, including: sending, by a second UE to a mobility management function, a second session establishment request message, where the second session establishment request message is used for requesting establishment of a second session, and the second session and a first session of a first UE are used for transmission of a same service flow.

Optionally, in an embodiment, the second session establishment request message causes the mobility management function to select, for the second session, a session management function the same as that for the first session.

Optionally, in an embodiment, the second session establishment request message includes at least one of the following: an identifier of the first UE, an identifier of the first session, description information of a service flow corresponding to a multi-UE aggregation function, and DNN information; or the second session establishment request message includes at least one of the following: a second UE aggregation group identifier, description information of a service flow corresponding to a multi-UE aggregation function, and DNN information.

Optionally, in an embodiment, the method further includes: obtaining, by the second UE, at least one of the following sent by the first UE: an identifier of the first UE, an identifier of the first session, description information of a service flow corresponding to a multi-UE aggregation function, and DNN information.

Optionally, in an embodiment, the second session establishment request message further includes first indication information, where the first indication information is used to indicate that the second session supports the multi-UE aggregation function.

According to a fifteenth aspect, a method for transmitting a service flow through multiple UEs is provided, including: receiving, by a mobility management function, a second session establishment request message sent by a second UE, where the second session establishment request message is used for requesting establishment of a second session, and the second session and a first session of a first UE are used for transmission of a same service flow; and sending, by the mobility management function, the second session establishment request message to a session management function.

Optionally, in an embodiment, the method further includes: selecting, by the mobility management function for the second session, a session management function the same as that for the first session.

Optionally, in an embodiment, the method further includes: determining, by the mobility management function, that the second session and the first session of the first UE are used for transmission of a same service flow.

Optionally, in an embodiment, the determining, by the mobility management function, that the second session and the first session of the first UE are used for transmission of a same service flow includes: determining, by the mobility management function based on the second session establishment request message, that a first user-plane tunnel of the first session and a second user-plane tunnel of the second session are used for transmission of a same service flow.

Optionally, in an embodiment, the determining, by the mobility management function, that the second session and the first session of the first UE are used for transmission of a same service flow includes: determining, by the mobility management function, that the second session and the first session of the first UE are used for transmission of a same service flow, based on at least one of the following in the second session establishment request message: an identifier of the first UE, an identifier of the first session, and description information of a service flow corresponding to the multi-UE aggregation function, and DNN information.

Optionally, in an embodiment, the second session establishment request message includes first indication information, where the first indication information is used to indicate that the second session supports the multi-UE aggregation function.

Optionally, in an embodiment, the method further includes: receiving, by the mobility management function, a first session establishment request message sent by the first UE, where the first session establishment request message includes a first UE aggregation group identifier.

Optionally, in an embodiment, the determining, by the mobility management function, that the second session and the first session of the first UE are used for transmission of a same service flow includes: determining, by the mobility management function, that a second UE aggregation group identifier included in the second session establishment request message is the same as the first UE aggregation group identifier and that the second session and the first session of the first UE are used for transmission of a same service flow.

Optionally, in an embodiment, the first session establishment request message further includes first aggregation service flow description information, and the second session establishment request message further includes second aggregation service flow description information.

Optionally, in an embodiment, the determining, by the mobility management function, that the second session and the first session of the first UE are used for transmission of a same service flow includes: determining, by the mobility management function, that the second session and the first session of the first UE are used for transmission of a same service flow, based on that the first UE aggregation group identifier and the second UE aggregation group identifier are identical and that the first aggregation service flow description information and the second aggregation service flow description information are identical.

Optionally, in an embodiment, the selecting, by the mobility management function for the second session, a session management function the same as that for the first session includes: obtaining, by the mobility management function, a session management function for the first session from a data management or storage function; and using, by the mobility management function, the obtained session management function as a session management function for the second session.

In the embodiments of this application, the mobility management function determines that the first session of the first UE and the second session of the second UE are used for transmission of a same service flow, and selects a same session management function for the first session and the second session. In this way, the session management function can associate the first session with the second session, facilitating multi-UE transmission of a service flow and improving the communication efficiency.

### BRIEF DESCRIPTION OF DRAWINGS

FIG. 1 is a schematic diagram of a wireless communications system according to an embodiment of this application;
FIG. 2 is a schematic flowchart of a method for transmitting a service flow through multiple UEs according to an embodiment of this application;
FIG. 3 is a schematic diagram of a system structure for a method for transmitting a service flow through multiple UEs according to an embodiment of this application;
FIG. 4 is a schematic flowchart of a method for transmitting a service flow through multiple UEs according to an embodiment of this application;
FIG. 5 is a schematic flowchart of a method for transmitting a service flow through multiple UEs according to an embodiment of this application;
FIG. 6 is a schematic flowchart of a method for transmitting a service flow through multiple UEs according to an embodiment of this application;
FIG. 7 is a schematic flowchart of a method for transmitting a service flow through multiple UEs according to an embodiment of this application;
FIG. 8 is a schematic flowchart of a method for transmitting a service flow through multiple UEs according to an embodiment of this application;
FIG. 9 is a schematic structural diagram of an apparatus for transmitting a service flow through multiple UEs according to an embodiment of this application;
FIG. 10 is a schematic structural diagram of an apparatus for transmitting a service flow through multiple UEs according to an embodiment of this application;
FIG. 11 is a schematic structural diagram of an apparatus for transmitting a service flow through multiple UEs according to an embodiment of this application;
FIG. 12 is a schematic diagram of a structure of a communication device according to an embodiment of this application;
FIG. 13 is a schematic diagram of a structure of a terminal according to an embodiment of this application; and
FIG. 14 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship. The steps in various embodiments of this application are merely for illustration purposes and may not be mandatory.

It should be noted that the technologies described in the embodiments of this application are not limited to long term evolution (Long Term Evolution, LTE)/LTE-Advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

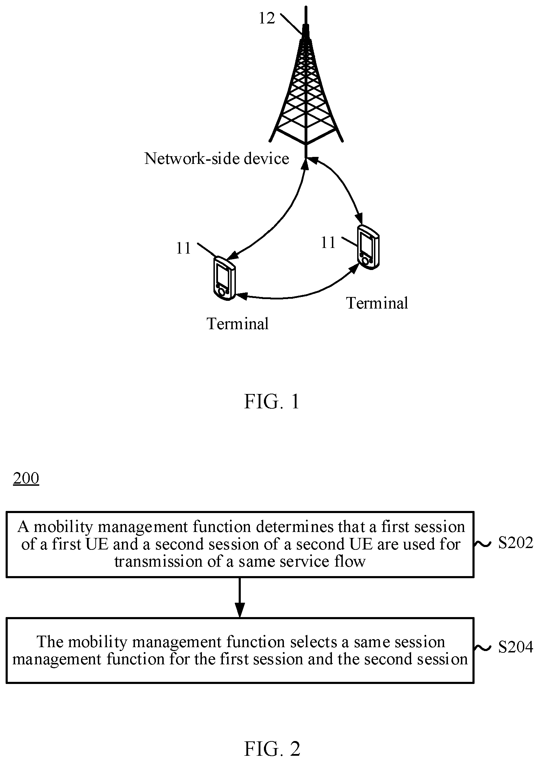

FIG. 1 is a schematic diagram of a wireless communications system to which embodiments of this application are applicable. The wireless communications system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicular user equipment (VUE), or pedestrian user equipment (PUE). The wearable device includes a smart watch, a wrist band, earphones, glasses, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a next generation NodeB (gNB), a home NodeB, a home evolved NodeB, a WLAN access point, a Wi-Fi node, a transmitting receiving point (Transmitting Receiving Point, TRP), or other appropriate terms in the art. Provided that the same technical effect is achieved, the base station is not limited to any specific technical terms. It should be noted that in the embodiments of this application, the base station in the NR system is merely used as an example, and a specific type of the base station is not limited.

The following describes in detail the method and device for transmitting a service flow through multiple UEs provided in the embodiments of this application by using some embodiments and application scenarios thereof with reference to the accompanying drawings.

The scenarios of multi-UE transmission of a service flow in the embodiments of this application can be categorized as the following two cases.

Case 1. Two independent terminals with two subscriber identity module (Subscriber Identity Module, SIM) cards (corresponding to a first UE and a second UE) communicate with a wireless network through a wireless air interface (for example, a Uu interface).

The first UE (or the terminal carrying the first UE) has a multi-UE aggregation function, also known as a multi-terminal joint transmission function or as a service splitting/aggregation function. For example, all or part of service flow data of the first UE may be transmitted uplink by the second UE to a wireless communications network; and the first UE may receive service flow data from the second UE, and aggregate it with the service flow data received from the network side to form a complete service flow. The interaction between the first UE and the second UE may be based on a wired connection, Wi-Fi, Bluetooth, a PC5 interface, or the like.

Case 2. A terminal (or a device) carries two SIM cards, which is equivalent to a terminal with two UEs (a first UE and a second UE), and the first UE and the second UE communicate with a wireless network through two wireless air interfaces (for example, Uu interfaces).

A multi-UE aggregation function is provided in the terminal. For example, all or part of service flow data of the terminal may be transmitted uplink by the first UE and the second UE to the wireless communications network; and the terminal may receive downlink service flow data from the network side sent by the first UE and/or the second UE, and aggregate such data to form a complete service flow. The interaction between the terminal and the two UEs is based on internal implementation; and the interaction between the first UE and the second UE is based on internal implementation within the terminal.

Regarding the foregoing multi-UE joint transmission scenario (two UEs as an example) and requirements, each UE can establish a session (for example, a packet data unit (Packet Data Unit, PDU) session) with a network in 3GPP access mode (for example, Uu air interface). The first UE and the second UE transmit one uplink service flow through two sessions to the communications network, aggregate the two sessions in the communications network (for example, a user plane function (User Plane Function, UPF)), and then transmit the aggregated session to a target data network or server. A downlink service flow sent by the target data network/server is split in the communications network (for example, the UPF), forwarded through two sessions to two UEs, and finally aggregated into one service flow by the two UEs.

The foregoing solution is implemented on the premise that the network (for example, the session management function) can associate two sessions of two UEs for multi-UE transmission of a service flow. This requires the two sessions to be processed by the same session management function. However, how to enable the session management function to associate multiple sessions of multiple terminals for multi-UE transmission of a service flow is a technical problem that needs to be urgently solved in the related art.

To resolve this technical problem, as shown in FIG. 2, an embodiment of this application provides a method 200 for transmitting a service flow through multiple UEs. The method may be executed by a mobility management function. In other words, the method may be executed by software or hardware installed on the mobility management function. The method includes the following steps.

S202. A mobility management function determines that a first session of a first UE and a second session of a second UE are used for transmission of a same service flow.

The same service flow mentioned in this step may be a service flow corresponding to the same application (application) identification (identification, ID).

It should be noted that the same service flow mentioned in various embodiments of this application may also refer to transmission of service flows of a same service, and is not limited to one service flow. For example, multiple service flows (voice flow and video flow) may exist in the extended reality (Extended Reality, XR) service, and one service flow may be transmitted using one session, while another service flow is transmitted using another session.

Therefore, the same service flow mentioned herein may be one service flow, for example, one service data flow (Service Data Flow, SDF); or may be multiple service flows, for example, multiple SDFs. Specifically, for example, a high-definition video service includes a voice flow and a video flow.

In addition, in various embodiments of this application, two UEs are used as an example to describe the method for transmitting a service flow through multiple UEs. Actually, more UEs may be used, and the embodiments of this application are not limited to two UEs.

The mobility management function mentioned in various embodiments of this application may be used for access and mobility management of UEs, and may have different names in different communications systems. For example, in a 5G communications system, the mobility management function may be referred to as an access and mobility management function (Access and Mobility Management Function, AMF).

Similarly, the sessions mentioned in various embodiments of this application, for example, the first session and the second session, may all be packet data unit (Packet Data Unit, PDU) sessions (session). Certainly, a PDU session may also have other names in other communications systems. The session establishment requests mentioned in various embodiments of this application, for example, the first session establishment request and the second session establishment request, may all be PDU session establishment requests (PDU session establish request). Certainly, a PDU session establishment request may also have other names in other communications systems. The session identifiers mentioned in various embodiments of this application, for example, the identifier of the first session and the identifier of the second session, may be PDU session IDs (PDU session ID). Certainly, a PDU session ID may also have other names in other communications systems.

In one example, the mobility management function may receive a second session establishment request message sent by the second UE, and determine that the first session of the first UE and the second session of the second UE are used for transmission of a same service flow, based on at least one of the following in the second session establishment request message: an identifier of the first UE, an identifier of the first session, and description information of a service flow corresponding to the multi-UE aggregation function.

In this example, the second UE may interact with the first UE to obtain the identifier of the first UE, the identifier of the first session, and the like. Optionally, in a case that the second UE sends the identifier of the first session to the mobility management function, the second UE may further send a quality of service (Quality of Service, QoS) flow identity (QoS Flow Identity, QFI) of the first UE and the like, so that the network can subsequently associate a second QoS flow of the second session with a first QoS flow corresponding to the QFI of the first session.

In this example, the description information of a service flow corresponding to the multi-UE aggregation function is used, where the description information of a service flow is used to indicate a service type of the service flow for which the multi-UE aggregation function needs to be implemented. The description information of a service flow corresponding to the multi-UE aggregation function may include service features corresponding to the service flow for which the multi-UE aggregation function needs to be implemented, including information such as Internet protocol (Internet Protocol, IP) packet filter (IP packet filter) information, service identification information, data network name (Data Network Name, DNN) information, service type, service identity, and IP quintuple.

In this example, in a case that the second session establishment request message includes the description information of a service flow corresponding to the multi-UE aggregation function, the mobility management function may determine, based on internal configuration information, that the service flow description information corresponding to the second session corresponds to the multi-UE aggregation function.

In another example, the mobility management function receives a first session establishment request message sent by the first UE and a second session establishment request message sent by the second UE, where the first session establishment request message includes a first UE aggregation group identifier, and the second session establishment request message includes a second UE aggregation group identifier. The mobility management function determines that the first session of the first UE and the second session of the second UE are used for transmission of a same service flow, based on that the first UE aggregation group identifier and the second UE aggregation group identifier are identical.

In this embodiment, the determining, by the mobility management function, that the first session of the first UE and the second session of the second UE are used for transmission of a same service flow may include: determining, by the mobility management function, that a first user-plane tunnel of the first session and a second user-plane tunnel of the second session are used for transmission of a same service flow.

S204. The mobility management function selects a same session management function for the first session and the second session.

The session management function mentioned in various embodiments of this application may be used for session management of UEs, and may have different names in different communications systems. For example, in a 5G communications system, the session management function may be referred to as a session management function (Session Management Function, SMF).

In this step, the selecting, by the mobility management function, the same session management function for the first session and the second session includes: selecting, by the mobility management function, a same session management function for the first session and the second session from session management functions supporting a multi-UE aggregation function; where the multi-UE aggregation function includes a function of transmitting a same service flow (or multiple service flows of a same service, applicable hereafter) through multiple sessions corresponding to multiple UEs.

In this step, the mobility management function may use a session management function for the first session as the session management function for the second session, so that the same session management function is selected for the first session and the second session.

In this embodiment, after the mobility management function selects a same session management function for the first session and the second session, the session management function may associate the first session with the second session, and may also associate different quality of service (Quality of Service, QoS) flows of the first session and second session that are specific to transmission of a service flow, allowing for design of appropriate splitting/aggregation policies for them.

In the method for transmitting a service flow through multiple UEs provided in the embodiment of this application, the mobility management function determines that the first session of the first UE and the second session of the second UE are used for transmission of a same service flow and selects a same session management function for the first session and the second session. In this way, the session management function can associate the first session with the second session, facilitating multi-UE transmission of a service flow and improving the communication efficiency.

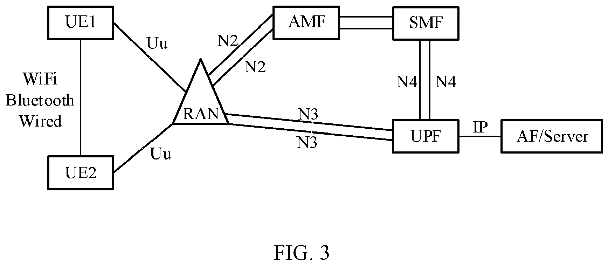

As shown in FIG. 3, FIG. 3 schematically illustrates a system structure of a method for transmitting a service flow through multiple UEs provided in an embodiment of this application. An implementation principle of the method is as follows.

UE1 (namely, a first UE) and UE2 (namely, a second UE) register with a wireless communications network. UE1 and UE2 establish respective sessions. A session establishment request message initiated by each UE is sent to a corresponding mobility management function (for example, an AMF), and the mobility management function selects a session management function (for example, an SMF) for each session.

During the session establishment procedure, the mobility management function identifies that the two sessions are associated and intended for aggregated/split transmission of a same service flow. Then the mobility management function selects a same session management function for the two sessions.

The session management function associates and binds the two sessions, generates an appropriate service flow aggregation/splitting policy, and sends it to the UEs (or terminals carrying the UEs) and a user-plane function (for example, a UPF) for installation.

Regarding a downlink service flow from a target network (for example, an application function (Application Function, AF))/server, the user-plane function splits it for two sessions according to the policy installed. After the service flows reach the two UEs, the UEs aggregate the data flows on one UE (for case 1) or on a terminal (for case 2).

Regarding an uplink service flow, one of the UEs (for case 1) or the terminal (for case 2) splits it for two sessions of the two UEs according to the policy installed. After the service flows reach the user-plane function, the user-plane function aggregates the service flows from the two sessions into one service flow, and delivers it to the target network/server.

On the basis of the embodiment 200, optionally, the determining, by a mobility management function, that a first session of a first UE and a second session of a second UE are used for transmission of a same service flow in S202 includes: receiving, by the mobility management function, a second session establishment request message sent by the second UE; and determining, by the AMF, that the first session of the first UE and the second session of the second UE are used for transmission of a same service flow, based on at least one of the following in the second session establishment request message: an identifier of the first UE, an identifier of the first session, and description information of a service flow corresponding to the multi-UE aggregation function.

In this embodiment, the second session establishment request message further includes at least one of the following:
(1) First indication information, where the first indication information is used to indicate that the second session supports the multi-UE aggregation function. In other words, the first indication information is used to indicate that the second session is a session for multi-UE aggregated transmission.
   The first indication information may be in the specific form of UE aggregation indication (UE aggregation indication), multi-UE aggregation based on multi-connection indication (multi-UE aggregation based on multi-connection indication), aggregated PDU session requested type (aggregated PDU session requested type), or the like.
(2) Capability information of the second UE, where the capability information of the second UE indicates whether the second UE supports the multi-UE aggregation function. In this example, the second UE supports the multi-UE aggregation function.

In this embodiment, the selecting, by the mobility management function, a same session management function for the first session and the second session includes: using, by the mobility management function, a session management function for the first session as the session management function for the second session.

Before this embodiment, the method may further include the following step: receiving, by the mobility management function, a first session establishment request message sent by the first UE, where the first session establishment request message includes at least one of the following:
(1) Second indication information, where the second indication information is used to indicate that the first session supports the multi-UE aggregation function. In other words, the second indication information is used to indicate that the first session is a session for multi-UE aggregated transmission.
   The second indication information may be in the specific form of UE aggregation indication (UE aggregation indication), multi-UE aggregation based on multi-connection indication (multi-UE aggregation based on multi-connection indication), aggregated PDU session requested type (aggregated PDU session requested type), or the like.
(2) Capability information of the first UE, where the capability information of the first UE indicates whether the first UE supports the multi-UE aggregation function. In this example, the first UE supports the multi-UE aggregation function.

On the basis of the embodiment 200, the method may further include the following step: receiving, by the mobility management function, a first session establishment request message sent by the first UE and a second session establishment request message sent by the second UE; where the first session establishment request message includes a first UE aggregation group identifier, and the second session establishment request message includes a second UE aggregation group identifier.

In this embodiment, the determining, by a mobility management function, that a first session of a first UE and a second session of a second UE are used for transmission of a same service flow in S202 includes: determining, by the mobility management function, that the first session of the first UE and the second session of the second UE are used for transmission of a same service flow, based on that the first UE aggregation group identifier and the second UE aggregation group identifier are identical.

Optionally, the first session establishment request message further includes first aggregation service flow description information, and the second session establishment request message further includes second aggregation service flow description information. The determining, by a mobility management function, that a first session of a first UE and a second session of a second UE are used for transmission of a same service flow includes: determining, by the mobility management function, that the first session of the first UE and the second session of the second UE are used for transmission of a same service flow, based on that the first UE aggregation group identifier and the second UE aggregation group identifier are identical and that the first aggregation service flow description information and the second aggregation service flow description information are identical.

For example, the mobility management function determines that the first session of the first UE and the second session of the second UE are used for transmission of a same service flow based on that the following content is identical in the first session establishment request message and second session establishment request message: identical UE aggregation group identifiers, and identical DNN or single network slice selection assistance information (Single Network Slice Selection Assistance Information, S-NNSI).

In this embodiment, the selecting, by the mobility management function, a same session management function for the first session and the second session includes: selecting, by the mobility management function, a same session management function for the first session and the second session based on the second UE aggregation group identifier and a first mapping relationship; where the first mapping relationship includes a mapping relationship between the first UE aggregation group identifier and the session management function for the first session.

In this embodiment, the first session establishment request message and/or the second session establishment request message further includes at least one of the following:
(1) second indication information included in the first session establishment request message, where the second indication information is used to indicate that the first session supports a multi-UE aggregation function;
(2) first indication information included in the second session establishment request message, where the first indication information is used to indicate that the second session supports a multi-UE aggregation function;
(3) description information of a service flow corresponding to the multi-UE aggregation function, where the description information of a service flow is used to indicate a service type of the service flow, on which the multi-UE aggregation function needs to be implemented, where the description information of a service flow corresponding to the multi-UE aggregation function may include service features corresponding to the service flow for which the multi-UE aggregation function needs to be implemented, including information such as IP packet filter (IP packet filter) information, service identification information, data network name (Data Network Name, DNN) information, service type, service identity, and IP quintuple; and
(4) data network name (Data Network Name, DNN) information, where the DNN information is used to indicate an identifier of a DNN supporting the multi-UE aggregation function.

In the foregoing embodiments, the selecting, by the mobility management function, a same session management function for the first session and the second session may further include: obtaining, by the mobility management function, a session management function for the first session from a data management or storage function; and using, by the mobility management function, the obtained session management function as a session management function for the second session.

In this embodiment, the session management function for the first session may register with the data management or storage function, so that a mobility management function serving a second UE obtains information of the session management function.

The data management or storage function may be unified data management (Unified Data Management, UDM)/unified data repository (Unified Data Repository, UDR).

In addition to the foregoing embodiments, an embodiment of this application further provides a method for transmitting a service flow through multiple UEs, including: sending, by a second UE to a mobility management function, a second session establishment request message, where the second session establishment request message is used for requesting establishment of a second session, and the second session and a first session of a first UE are used for transmission of a same service flow.

Optionally, in an embodiment, the second session establishment request message causes the mobility management function to select, for the second session, a session management function the same as that for the first session.

Optionally, in an embodiment, the second session establishment request message includes at least one of the following: an identifier of the first UE, an identifier of the first session, description information of a service flow corresponding to a multi-UE aggregation function, and DNN information; or the second session establishment request message includes at least one of the following: a second UE aggregation group identifier, description information of a service flow corresponding to a multi-UE aggregation function, and DNN information.

Optionally, in an embodiment, the method further includes: obtaining, by the second UE, at least one of the following sent by the first UE: an identifier of the first UE, an identifier of the first session, description information of a service flow corresponding to a multi-UE aggregation function, and DNN information.

Optionally, in an embodiment, the second session establishment request message further includes first indication information, where the first indication information is used to indicate that the second session supports the multi-UE aggregation function.

In addition to the foregoing embodiments, an embodiment of this application further provides a method for transmitting a service flow through multiple UEs, including: receiving, by a mobility management function, a second session establishment request message sent by a second UE, where the second session establishment request message is used for requesting establishment of a second session, and the second session and a first session of a first UE are used for transmission of a same service flow; and sending, by the mobility management function, the second session establishment request message to a session management function.

Optionally, in an embodiment, the method further includes: selecting, by the mobility management function for the second session, a session management function the same as that for the first session.

Optionally, in an embodiment, the method further includes: determining, by the mobility management function, that the second session and the first session of the first UE are used for transmission of a same service flow.

Optionally, in an embodiment, the determining, by the mobility management function, that the second session and the first session of the first UE are used for transmission of a same service flow includes: determining, by the mobility management function based on the second session request message, that a first user-plane tunnel of the first session and a second user-plane tunnel of the second session are used for transmission of a same service flow.

Optionally, in an embodiment, the determining, by the mobility management function, that the second session and the first session of the first UE are used for transmission of a same service flow includes: determining, by the mobility management function, that the second session and the first session of the first UE are used for transmission of a same service flow, based on at least one of the following in the second session establishment request message: an identifier of the first UE, an identifier of the first session, and description information of a service flow corresponding to the multi-UE aggregation function, and DNN information.

Optionally, in an embodiment, the second session establishment request message includes first indication information, where the first indication information is used to indicate that the second session supports the multi-UE aggregation function.

Optionally, in an embodiment, the method further includes: receiving, by the mobility management function, a first session establishment request message sent by the first UE, where the first session establishment request message includes a first UE aggregation group identifier.

Optionally, in an embodiment, the determining, by the mobility management function, that the second session and the first session of the first UE are used for transmission of a same service flow includes: determining, by the mobility management function, that a second UE aggregation group identifier included in the second session establishment request message is the same as the first UE aggregation group identifier and that the second session and the first session of the first UE are used for transmission of a same service flow.

Optionally, in an embodiment, the first session establishment request message further includes first aggregation service flow description information, and the second session establishment request message further includes second aggregation service flow description information.

Optionally, in an embodiment, the determining, by the mobility management function, that the second session and the first session of the first UE are used for transmission of a same service flow includes: determining, by the mobility management function, that the second session and the first session of the first UE are used for transmission of a same service flow, based on that the first UE aggregation group identifier and the second UE aggregation group identifier are identical and that the first aggregation service flow description information and the second aggregation service flow description information are identical.

Optionally, in an embodiment, the selecting, by the mobility management function for the second session, a session management function the same as that for the first session includes: obtaining, by the mobility management function, a session management function for the first session from a data management or storage function; and using, by the mobility management function, the obtained session management function as a session management function for the second session.

In order to describe in detail the method for transmitting a service flow through multiple UEs provided in the embodiments of this application, the following provides a description with reference to several specific embodiments.

It should be noted that some steps in the subsequent embodiments are merely for illustration purposes and may not be mandatory but may be omitted during execution.

### Embodiment 1

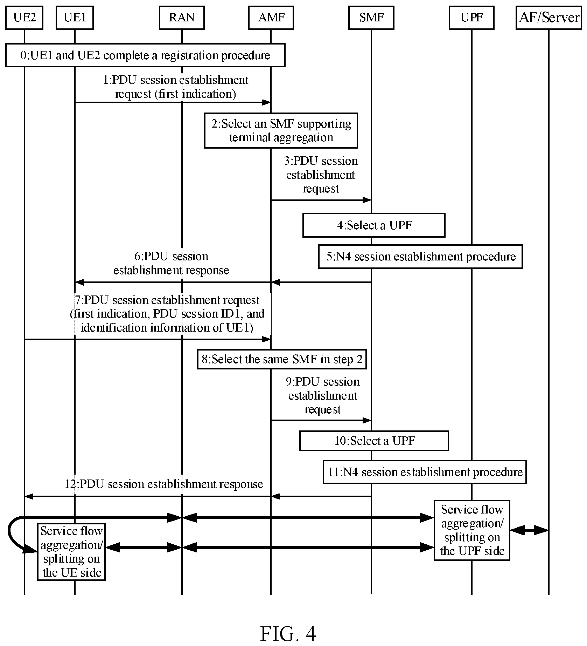

This embodiment is applicable to a scenario where two UEs can exchange relevant information through an internal interface. As shown in FIG. 4, this embodiment includes the following steps.

Step 0. UE1 and UE2 complete a registration procedure.

Step 1: UE1 triggers a PDU session establishment procedure and sends to an AMF a PDU session establishment request (session establishment request) (message). The PDU session establishment request may carry a PDU session ID1 and a first indication (indication). The first indication (equivalent to the second indication information in the foregoing embodiments) is used to indicate that the PDU session ID1 requested to be established is a session used for service flow aggregation/splitting (or a multi-UE aggregation function). It can be understood that the first indication is optional information and may be or may not be carried in the PDU session establishment request.

The first indication may be in the specific form of UE aggregation indication (UE aggregation indication), multi-UE aggregation based on multi-connection indication (multi-UE aggregation based on multi-connection indication), aggregated PDU session requested type (aggregated PDU session requested type), or the like.

Optionally, the PDU session establishment request may further include one or more of the following information:
(1) identification information of UE1, for example, a subscription concealed identifier (Subscription Concealed Identifier, SUCI), a fifth generation globally unique temporary identifier (5^{th} Generation Globally Unique Temporary Identifier, 5G GUTI), a SG-temporary mobile subscriber identity (SAE-Temporary Mobile Subscriber Identity, S-TMSI), or the like of UE1;
(2) service aggregation/splitting capability information of UE1, for example, whether terminal aggregation is supported, whether the multipath transmission control protocol (MultiPath TCP, MPTCP), multipath fast UDP Internet connection protocol (Multipath QUIC, MPQUIC), or splitting/aggregation capability based on underlying protocols is supported;
(3) service aggregation/splitting grouping information corresponding to UE1, for example, terminal aggregation group identification (UE aggregation group ID), and UE2 identification (aggregated UE2 ID) associated with UE1 aggregation;
(4) data network name (Data Network Name, DNN) information; and
(5) single network slice selection assistance information (Single Network Slice Selection Assistance Information, S-NSSAI).

Step 2. The AMF selects, for the PDU session ID1 based on the first indication, an SMF supporting terminal aggregation (or supporting a multi-UE aggregation function).

Specifically, during the PDU session establishment procedure, on the basis of SMF selection with reference to information such as the DNN or the S-NSSAI, the AMF may further select an SMF with a special capability, that is, an SMF supporting terminal aggregation (UE aggregation), with reference to the first indication.

Step 3. The AMF sends to the SMF the PDU session establishment request initiated by UE1.

The PDU session establishment request may carry a PDU session ID1 and a first indication, where the first indication is used to indicate that the PDU session ID1 requested to be established is used for service flow aggregation/splitting.

Step 4. The SMF selects a UPF for the PDU session ID1 based on the first indication.

Step 5. The SMF and the UPF implement an N4 session establishment procedure, where the N4 session corresponds to the PDU session ID 1.

In this step, the SMF may send an N4 session establishment request message to the UPF, where the N4 session establishment request message may carry N4 rules defined by the SMF for the N4 session, such as billing, quality of service (Quality of Service, QoS), or gating control rules.

Step 6. The SMF sends a PDU session establishment response (session establishment response) to UE1 via the AMF, informing UE1 that the PDU session ID1 has been established.

The PDU session establishment response may carry UE rules (UE rule) defined by the SMF for the PDU session ID1, for example, a QoS rule or a UE route selection policy (UE Route Selection Policy, URSP) rule.

Step 7. UE2 triggers a PDU session establishment procedure and sends a PDU session establishment request to the AMF, where the PDU session establishment request carries a PDU session ID2 and a first indication (corresponding to the first indication information in the foregoing embodiments), and the first indication is used to indicate that the PDU session ID2 requested to be established is used for service flow aggregation/splitting.

This step differs from step 1 in that the PDU session establishment request may also carry the PDU session ID1 of UE1 in step 1 and identification information of UE1, for example, a SUCI, 5G GUTI, or 5G-S-TMSI of UE1, or an IP address (address) of UE1. Such identification information is used for the AMF to select, for the PDU session ID2 of UE2, an SMF the same as that for the PDU session ID1 of UE1.

Before this step is performed, UE2 may obtain the PDU session ID1, identification information, and the like of UE1 over an interface between UE2 and UE1.

Step 8. The AMF selects, for the PDU session ID2 of UE2 based on the PDU session establishment request sent by UE2, an SMF the same as that for the PDU session ID1 of UE1.

Specifically, the AMF may select, based on the PDU session ID1 and identification information of UE1 reported by UE2, the SMF selected in step 2.

Step 9. Similar to step 3, the AMF sends a PDU session establishment request of UE2 to the SMF.

The PDU session establishment request may carry a PDU session ID2 and a first indication, where the first indication is used to indicate that the PDU session requested to be established is used for service flow aggregation/splitting.

Step 10. The SMF selects a UPF for the PDU session ID2 based on the identification information of UE1 and the PDU session ID1.

Step 11. The SMF and the UPF implement an N4 session establishment procedure, where the N4 session corresponds to the PDU session ID2.

In this step, the SMF may send an N4 session establishment request message to the UPF, where the N4 session establishment request message may carry N4 rules defined by the SMF for the N4 session, such as billing, QoS, or gating control rules.

Step 12. The SMF sends a PDU session establishment response to UE2 via the AMF, informing UE2 that the PDU session ID2 has been established.

The PDU session establishment response may carry terminal rules established by the SMF for the PDU session ID2, for example, QoS rules and URSP rules.

Optionally, the PDU session establishment response may carry a service flow aggregation/splitting policy defined by the SMF for the PDU session ID2.

In this embodiment, the UEs and the UPF can implement uplink and downlink service flow aggregation and splitting based on the foregoing associated PDU session path and the aggregation/splitting policies on the corresponding UEs and UPF.

Through the foregoing procedures, the network can select the same SMF and UPF for the two PDU sessions of two UEs (that is, UE1 and UE2), making it possible for the SMF to associate the two PDU sessions and provide an aggregation/splitting policy subsequently.

### Embodiment 2

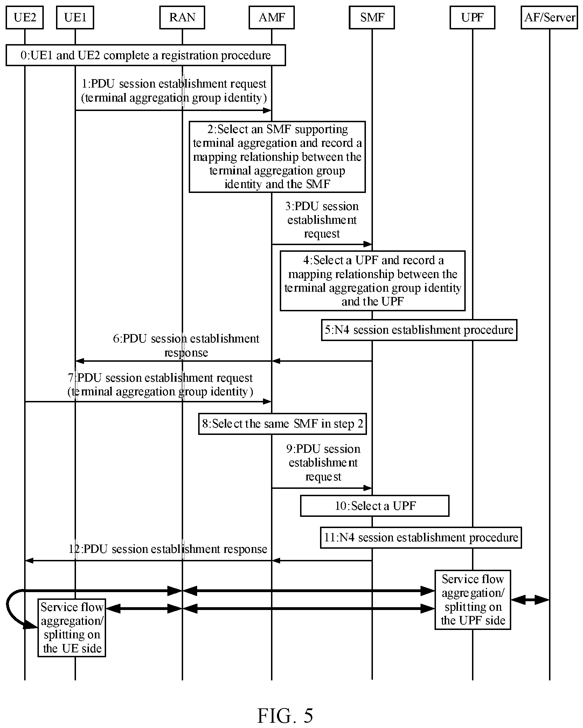

This embodiment is applicable to a scenario where two UEs (that is, UE1 and UE2) cannot exchange relevant information through an internal interface. For example, identification information of UE 1 and a PDU session ID1 cannot be exchanged between UE1 and UE2. As shown in FIG. 5, this embodiment includes the following steps.

In embodiment 2, the UE registration procedure and the PDU session establishment procedure are implemented with reference to embodiment 1, and the differences are as follows.

In step 1, the PDU session establishment request sent by UE1 carries identification information of a terminal aggregation group to which UE1 belongs (UE aggregation group ID). In step 7, the PDU session establishment request sent by UE2 does not carry the identification information of UE1 and the PDU session ID1, but carries identification information of a terminal aggregation group to which UE2 belongs (UE aggregation group ID).

The terminal aggregation group ID is identification or description information of grouping for terminal service flow aggregation/splitting. For example, if both UE1 and UE2 belong to terminal aggregation group 1, it means that the PDU sessions of UE1 and UE2 can be aggregated.

Optionally, the PDU session establishment request in steps 1 and 7 may further carry at least one of the following: a first indication, aggregation service type information, and DNN information.

The first indication is used to indicate that the PDU session ID1/PDU session ID2 requested to be established is used for service flow aggregation/splitting.

The aggregation service type information is used to indicate the service type of service flows that need to be aggregated/split. For example, if the aggregation service type is AR type (type), it indicates that data flows of the AR service initiated by a UE in the terminal aggregation group need to be aggregated/split.

The DNN information may indicate some aggregated DNNs supporting terminal aggregation. For example, in a case that the IMS DNN supports terminal aggregation, if the PDU session establishment request of UE1/UE2 carries the IMS DNN, it indicates that the PDU session ID1/PDU session ID2 and PDU sessions, corresponding to the IMS DNN, of other UEs in the same terminal aggregation group can be aggregated/split.

In step 2, after selecting an SMF that supports terminal aggregation, the AMF records a mapping relationship between the terminal aggregation group identifier and the selected SMF. Optionally, the AMF further records a mapping between the aggregation service type information or DNN and the above-mentioned information (that is, the terminal aggregation group identifier and the SMF).

In step 8, the AMF selects an SMF based on the terminal aggregation group identifier sent by UE2 and the mapping relationship stored.

Optionally, the AMF may also select an SMF based on the aggregation service type information or DNN sent by UE2.

In step 4, after selecting a UPF for the PDU session ID1 based on the first indication, the SMF may further record a mapping relationship between the terminal aggregation group identifier sent by UE1 and the UPF.

Optionally, the SMF may further record a mapping relationship between the service type information or DNN and the following information: the terminal aggregation group identifier and the selected UPF.

In step 10, the SMF selects a corresponding UPF based on the terminal aggregation group identifier carried in the PDU session establishment request of UE2, and optionally the aggregation service type information and DNN information carried therein, as well as the stored mapping relationship.

In this embodiment, the two UEs do not exchange their own identification information and PDU session ID information. Depending on predefined terminal aggregation group identifier and other relevant information, the network side, for example, the AMF, knows whether two PDU sessions of the two UEs can be associated for UE aggregation, so that the same SMF can be selected.

### Embodiment 3

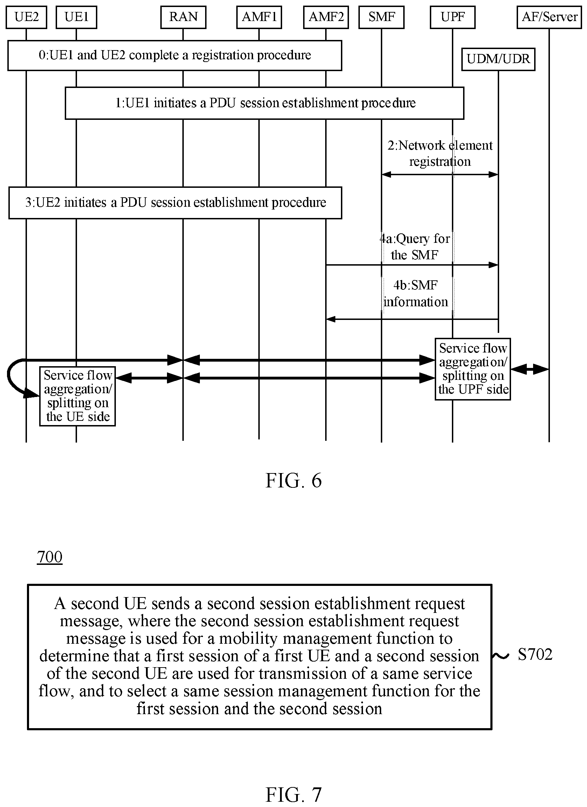

This embodiment is applicable to a scenario where UE1 and UE2 register with different AMFs. As shown in FIG. 6, this embodiment includes the following steps.

Step 0. UE1 and UE2 complete a registration procedure.

Step 1. UE1 triggers a PDU session establishment procedure. For details, refer to embodiment 1 or embodiment 2.

Step 2. After establishing a PDU session ID1 for UE1, an SMF initiates a network element registration procedure to a UDM/UDR for registering its own information in the UDM/UDR.

In this step, a registration message sent by the SMF to the UDM/UDR may include information of the SMF, and may also include at least one of the following information: identification information of UE1, the PDU session ID1, the terminal aggregation group identifier, the aggregation service type, and the DNN.

Step 3. UE2 triggers a PDU session establishment procedure. For details, refer to embodiment 1 or embodiment 2.

Step 4a. AMF2 queries the UDM/UDR to obtain information of the SMF corresponding to the PDU session ID 1.

Optionally, a query message sent by AMF2 to the UDM/UDR may include at least either of the following:
(1) identification information of UE1 and PDU session ID1, if reported by UE2 in step 3; and
(2) terminal aggregation group identifier. Optionally, the aggregation service type information and DNN may also be included, if reported by UE2 in step 3.

Step 4b. The UDM/UDR obtains, through query, the SMF for the PDU session ID1 based on either or both of the foregoing two types of index information, and sends the information of the SMF to AMF2.

The foregoing describes in detail a method for transmitting a service flow through multiple UEs according to an embodiment of this application with reference to FIG. 2 to FIG. 6. The following describes in detail a method for transmitting a service flow through multiple UEs according to an embodiment of this application with reference to FIG. 7 to FIG. 9. It can be understood that some of descriptions in FIG. 7 to FIG. 9 are the same as or match descriptions of the method shown in FIG. 2 to FIG. 6. To avoid repetition, relevant descriptions are appropriately omitted.

FIG. 7 is a schematic diagram of an implementation process of a method for transmitting a service flow through multiple UEs according to an embodiment of this application, which may be applied on the UE side. As shown in FIG. 7, the method 700 includes the following steps.

S702. A second UE sends a second session establishment request message, where the second session establishment request message is used for a mobility management function to determine that a first session of a first UE and a second session of the second UE are used for transmission of a same service flow, and to select a same session management function for the first session and the second session.

In this embodiment of this application, the second UE sends the second session establishment request message. The mobility management function determines that the first session of the first UE and the second session of the second UE are used for transmission of a same service flow, and selects a same session management function for the first session and the second session. In this way, the session management function can associate the first session with the second session, facilitating multi-UE transmission of a service flow and improving the communication efficiency.

Optionally, in an embodiment, the second session establishment request message includes at least one of the following: an identifier of the first UE, an identifier of the first session, description information of a service flow corresponding to a multi-UE aggregation function, and DNN information; or the second session establishment request message includes at least one of the following: a second UE aggregation group identifier, description information of a service flow corresponding to a multi-UE aggregation function, and DNN information.

Optionally, in an embodiment, the method further includes: obtaining, by the second UE, at least one of the following sent by the first UE: an identifier of the first UE, an identifier of the first session, description information of a service flow corresponding to a multi-UE aggregation function, and DNN information.

Optionally, in an embodiment, the second session establishment request message further includes at least one of the following: (1) first indication information, where the first indication information is used to indicate that the second session supports a multi-UE aggregation function; and (2) capability information of the second UE, where the capability information of the second UE indicates whether the second UE supports the multi-UE aggregation function.

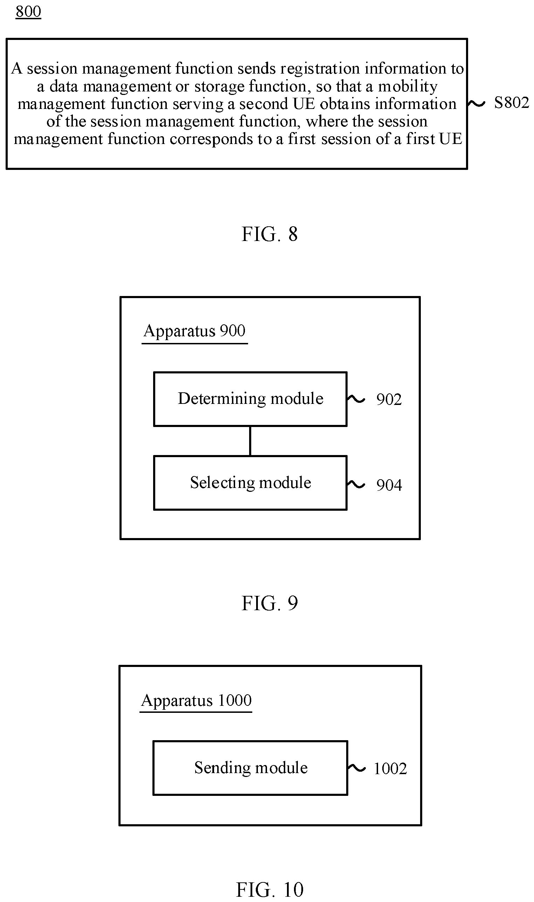

FIG. 8 is a schematic diagram of an implementation process of a method for transmitting a service flow through multiple UEs according to an embodiment of this application, which may be applied on the session management function side. As shown in FIG. 8, the method 800 includes the following steps.

S802. A session management function sends registration information to a data management or storage function, so that a mobility management function serving a second UE obtains information of the session management function, where the session management function corresponds to a first session of a first UE.

The registration information includes an identifier of the session management function and at least one of the following: an identifier of the first UE, an identifier of the first session, a first UE aggregation group identifier, description information of a service flow corresponding to a multi-UE aggregation function, and DNN information.

In this embodiment of this application, the session management function sends registration information to the data management or storage function, so that the mobility management function serving the second UE obtains the information of the session management function and selects a same session management function for the first session and the second session. In this way, the session management function can associate the first session with the second session, facilitating multi-UE transmission of a service flow and improving the communication efficiency.

It should be noted that the method for transmitting a service flow through multiple UEs provided in the embodiments of this application may be implemented by an apparatus for transmitting a service flow through multiple UEs or a control module for implementing the method for transmitting a service flow through multiple UEs in the apparatus for transmitting a service flow through multiple UEs. In this embodiment of this application, the apparatus for transmitting a service flow through multiple UEs according to an embodiment of this application is described by using an example in which the apparatus for transmitting a service flow through multiple UEs implements the method for transmitting a service flow through multiple UEs.

FIG. 9 is a schematic structural diagram of an apparatus for transmitting a service flow through multiple UEs according to an embodiment of this application. The apparatus may correspond to the mobility management function in other embodiments. As shown in FIG. 9, the apparatus 900 includes the following modules:
a determining module 902, which may be configured to determine that a first session of a first UE and a second session of a second UE are used for transmission of a same service flow; and
a selecting module 904, which may be configured to select a same session management function for the first session and the second session.

In the embodiment of this application, the apparatus 900 determines that the first session of the first UE and the second session of the second UE are used for transmission of a same service flow, and selects a same session management function for the first session and the second session. In this way, the session management function can associate the first session with the second session, facilitating multi-UE transmission of a service flow and improving the communication efficiency.

Optionally, in an embodiment, the determining module 902 is configured to determine that a first user-plane tunnel of the first session and a second user-plane tunnel of the second session are used for transmission of a same service flow.

Optionally, in an embodiment, the determining module 902 is configured to select a same session management function for the first session and the second session from session management functions supporting a multi-UE aggregation function; where the multi-UE aggregation function includes a function of transmitting a same service flow through multiple sessions corresponding to multiple UEs.

Optionally, in an embodiment, the determining module 902 is configured to: receive a second session establishment request message sent by the second UE; and determine that the first session of the first UE and the second session of the second UE are used for transmission of a same service flow, based on at least one of the following in the second session establishment request message: an identifier of the first UE, an identifier of the first session, and description information of a service flow corresponding to the multi-UE aggregation function.

Optionally, in an embodiment, the second session establishment request message further includes at least one of the following: (1) first indication information, where the first indication information is used to indicate that the second session supports a multi-UE aggregation function; and (2) capability information of the second UE, where the capability information of the second UE indicates whether the second UE supports the multi-UE aggregation function.

Optionally, in an embodiment, the selecting module 904 is configured to use a session management function for the first session as the session management function for the second session.

Optionally, in an embodiment, the apparatus further includes a receiving module configured to receive a first session establishment request message sent by the first UE, where the first session establishment request message includes at least one of the following: (1) second indication information, where the second indication information is used to indicate that the first session supports a multi-UE aggregation function; and (2) capability information of the first UE, where the capability information of the first UE indicates whether the first UE supports the multi-UE aggregation function.

Optionally, in an embodiment, the apparatus further includes a receiving module configured to receive a first session establishment request message sent by the first UE and a second session establishment request message sent by the second UE, where the first session establishment request message includes a first UE aggregation group identifier, and the second session establishment request message includes a second UE aggregation group identifier.

Optionally, in an embodiment, the determining module 902 is configured to determine that the first session of the first UE and the second session of the second UE are used for transmission of a same service flow, based on that the first UE aggregation group identifier and the second UE aggregation group identifier are identical.

Optionally, in an embodiment, the selecting module 904 is configured to select a same session management function for the first session and the second session based on the second UE aggregation group identifier and a first mapping relationship; where the first mapping relationship includes a mapping relationship between the first UE aggregation group identifier and the session management function for the first session.

Optionally, in an embodiment, the first session establishment request message further includes first aggregation service flow description information, and the second session establishment request message further includes second aggregation service flow description information. The determining module 902 is configured to determine that the first session of the first UE and the second session of the second UE are used for transmission of a same service flow, based on that the first UE aggregation group identifier and the second UE aggregation group identifier are identical and that the first aggregation service flow description information and the second aggregation service flow description information are identical.

Optionally, in an embodiment, the first session establishment request message and/or the second session establishment request message further includes at least one of the following: (1) second indication information included in the first session establishment request message, where the second indication information is used to indicate that the first session supports a multi-UE aggregation function; (2) first indication information included in the second session establishment request message, where the first indication information is used to indicate that the second session supports a multi-UE aggregation function; (3) description information of a service flow corresponding to the multi-UE aggregation function; and (4) DNN information, where the DNN information is used to indicate an identifier of a DNN supporting the multi-UE aggregation function.

Optionally, in an embodiment, the selecting module 904 is configured to: obtain a session management function for the first session from a data management or storage function; and use the obtained session management function as a session management function for the second session.

For the apparatus 900 according to this embodiment of this application, reference may be made to the processes of the method 200 in the corresponding embodiment of this application, and the units/modules of the apparatus 900 and other operations and/or functions described above are respectively intended to implement the corresponding processes in the method 200, with the same or equivalent technical effects achieved. For brevity, details are not described herein again.

FIG. 10 is a schematic structural diagram of an apparatus for transmitting a service flow through multiple UEs according to an embodiment of this application. The apparatus may correspond to the terminal (for example, the second UE) in other embodiments. As shown in FIG. 10, the apparatus 1000 includes the following modules:
a sending module 1002, which may be configured to send a second session establishment request message, where the second session establishment request message is used for a mobility management function to determine that a first session of a first UE and a second session of the apparatus are used for transmission of a same service flow, and to select a same session management function for the first session and the second session.

In the embodiment of this application, the apparatus 1000 sends the second session establishment request message. The mobility management function determines that the first session of the first UE and the second session of the second UE are used for transmission of a same service flow, and selects a same session management function for the first session and the second session. In this way, the session management function can associate the first session with the second session, facilitating multi-UE transmission of a service flow and improving the communication efficiency.

Optionally, in an embodiment, the second session establishment request message includes at least one of the following: an identifier of the first UE, an identifier of the first session, description information of a service flow corresponding to a multi-UE aggregation function, and DNN information; or the second session establishment request message includes at least one of the following: a second UE aggregation group identifier, description information of a service flow corresponding to a multi-UE aggregation function, and DNN information.

Optionally, in an embodiment, the apparatus further includes an obtaining module configured to obtain at least one of the following sent by the first UE: an identifier of the first UE, an identifier of the first session, description information of a service flow corresponding to a multi-UE aggregation function, and DNN information.

Optionally, in an embodiment, the second session establishment request message further includes at least one of the following: (1) first indication information, where the first indication information is used to indicate that the second session supports a multi-UE aggregation function; and (2) capability information of the apparatus, where the capability information of the apparatus indicates whether the apparatus supports the multi-UE aggregation function.

For the apparatus 1000 according to this embodiment of this application, reference may be made to the processes of the method 700 in the corresponding embodiment of this application, and the units/modules of the apparatus 1000 and other operations and/or functions described above are respectively intended to implement the corresponding processes in the method 700, with the same or equivalent technical effects achieved. For brevity, details are not described herein again.

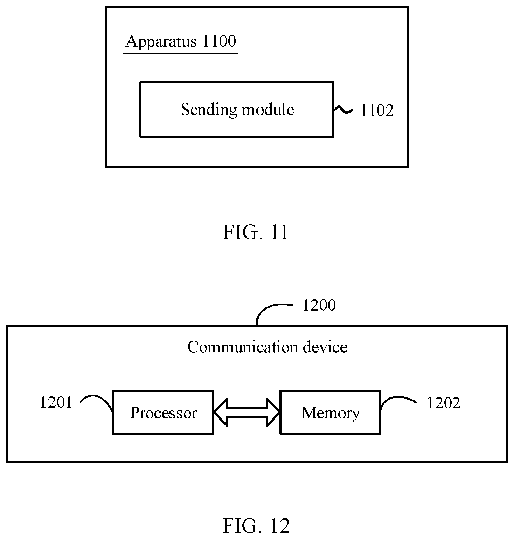

FIG. 11 is a schematic structural diagram of an apparatus for transmitting a service flow through multiple UEs according to an embodiment of this application. The apparatus may correspond to the session management function in other embodiments. As shown in FIG. 11, the apparatus 1100 includes the following modules:
a sending module 1102, which may be configured to send registration information to a data management or storage function, so that a mobility management function serving a second UE obtains information of the apparatus, where the apparatus corresponds to a first session of a first UE.

The registration information includes an identifier of the apparatus and at least one of the following: an identifier of the first UE, an identifier of the first session, a first UE aggregation group identifier, description information of a service flow corresponding to a multi-UE aggregation function, and DNN information.

In the embodiment of this application, the apparatus 1100 (for example, the session management function) sends registration information to the data management or storage function, so that the mobility management function serving the second UE obtains the information of the session management function and selects a same session management function for the first session and the second session. This allows the first session to be associated with the second session, facilitating multi-UE transmission of a service flow and improving the communication efficiency.

For the apparatus 1100 according to this embodiment of this application, reference may be made to the processes of the method 800 in the corresponding embodiment of this application, and the units/modules of the apparatus 1100 and other operations and/or functions described above are respectively intended to implement the corresponding processes in the method 800, with the same or equivalent technical effects achieved. For brevity, details are not described herein again.

The apparatus for transmitting a service flow through multiple UEs in this embodiment of this application may be an apparatus or an apparatus or electronic device with an operating system, or may be a component, an integrated circuit, or a chip of a terminal. The apparatus or electronic device may be a mobile terminal or a non-mobile terminal. For example, the mobile terminal may include but is not limited to a type of the foregoing terminal 11, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The for transmitting a service flow through multiple UEs provided in the embodiment of this application can implement the processes implemented by the method embodiments illustrated in FIG. 2 to FIG. 8, with the same technical effects achieved. To avoid repetition, details are not described herein again.

Optionally, as shown in FIG. 12, an embodiment of this application further provides a communication device 1200 including a processor 1201, a memory 1202, and a program or instructions stored in the memory 1202 and executable on the processor 1201. For example, in a case that the communication device 1200 is a terminal and the program or instructions are executed by the processor 1201, the processes of the foregoing embodiments of the method for transmitting a service flow through multiple UEs are implemented, with the same technical effects achieved. In a case that the communication device 1200 is a network-side device, when the program or instructions are executed by the processor 1201, the processes in the foregoing embodiments of the method for transmitting a service flow through multiple UEs are implemented, with the same technical effects achieved. To avoid repetition, details are not described herein again.

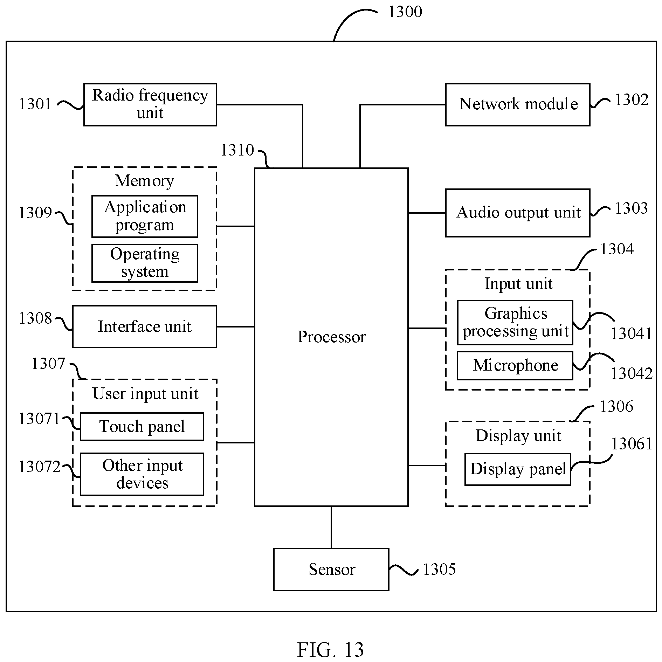

An embodiment of this application further provides a terminal, including a processor and a communication interface. The communication interface is configured to send a second session establishment request message, where the second session establishment request message is used for a mobility management function to determine that a first session of a first UE and a second session of a second UE are used for transmission of a same service flow, and to select a same session management function for the first session and the second session. The terminal embodiment is corresponding to the foregoing method embodiments used on the terminal side. All the implementation processes and implementation methods of the foregoing method embodiments can be applied to the terminal embodiment, with the same technical effects achieved. Specifically, FIG. 13 is a schematic diagram of a hardware structure of a terminal implementing the embodiments of this application.

A terminal 1300 includes but is not limited to at least some components of a radio frequency unit 1301, a network module 1302, an audio output unit 1303, an input unit 1304, a sensor 1305, a display unit 1306, a user input unit 1307, an interface unit 1308, a memory 1309, and a processor 1310.

Persons skilled in the art can understand that the terminal 1300 may further include a power source (for example, a battery) for supplying power to the components. The power source may be logically connected to the processor 1310 through a power management system. In this way, functions such as charge management, discharge management, and power consumption management are implemented by using the power management system. The structure of the terminal shown in FIG. 13 does not constitute a limitation on the terminal. The terminal may include more or fewer components than illustrated in the figure, or combine some components, or have a different component arrangement. Details are not described again herein.

It should be understood that in the embodiments of this application, the input unit 1304 may include a graphics processing unit (Graphics Processing Unit, GPU) 13041 and a microphone 13042. The graphics processing unit 13041 processes image data of a static picture or a video that is obtained by an image capture apparatus (for example, a camera) in a video capture mode or an image capture mode. The display unit 1306 may include a display panel 13061. The display panel 13061 may be configured in a form of a liquid crystal display, an organic light-emitting diode, or the like. The user input unit 1307 includes a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a functional button (such as a volume control button or a power on/off button), a trackball, a mouse, and a joystick. Details are not described again herein.

In the embodiments of this application, the radio frequency circuit 1301 receives downlink data from the network-side device for processing by the processor 1310, and sends uplink data to the network-side device. Generally, the radio frequency unit 1301 includes but is not limited to an antenna, at least one amplifier, a transceiver, a coupler, a low noise amplifier, a duplexer, and the like.

The memory 1309 may be configured to store software programs or instructions, and various data. The memory 1309 may mainly include a program or instruction storage area and a data storage area. The program or instruction storage area may store an operating system, an application program or instructions required by at least one function (for example, an audio playing function and an image playing function), and the like. In addition, the memory 1309 may include a high-speed random access memory, and may further include a non-transient memory. The non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash storage device, or another non-transient solid-state storage device.

The processor 1310 may include one or more processing units. Optionally, the processor 1310 may integrate an application processor and a modem processor. The application processor mainly processes an operating system, a user interface, an application program or instructions, and the like. The modem processor mainly processes wireless communication, for example, a baseband processor. It should be understood that alternatively, the modem processor may not be integrated into the processor 1310.

The radio frequency unit 1301 may be configured to send a second session establishment request message, where the second session establishment request message is used for a mobility management function to determine that a first session of a first UE and a second session of the second UE are used for transmission of a same service flow, and to select a same session management function for the first session and the second session.

In the embodiment of this application, the terminal (for example, the second UE) sends the second session establishment request message. The mobility management function determines that the first session of the first UE and the second session of the second UE are used for transmission of a same service flow, and selects a same session management function for the first session and the second session. In this way, the session management function can associate the first session with the second session, facilitating multi-UE transmission of a service flow and improving the communication efficiency.

The terminal 1300 provided in this embodiment of this application may further implement the processes of the foregoing embodiments of the method for transmitting a service flow through multiple UEs, with the same technical effects achieved. To avoid repetition, details are not described herein again.

An embodiment of this application further provides a network-side device, including a processor and a communication interface. The processor is configured to: determine that a first session of a first UE and a second session of a second UE are used for transmission of a same service flow, and select a same session management function for the first session and the second session; or the communication interface is configured to send registration information to a data management or storage function, so that a mobility management function serving a second UE obtains information of the session management function, where the session management function corresponds to a first session of a first UE, and the registration information includes an identifier of the session management function and at least one of the following: an identifier of the first UE, an identifier of the first session, a first UE aggregation group identifier, description information of a service flow corresponding to a multi-UE aggregation function, and DNN information. The network-side device embodiment is corresponding to the foregoing method embodiments applied to the network-side device. All the implementation processes and implementation methods of the foregoing method embodiments can be applied to the network-side device embodiment, with the same technical effects achieved.

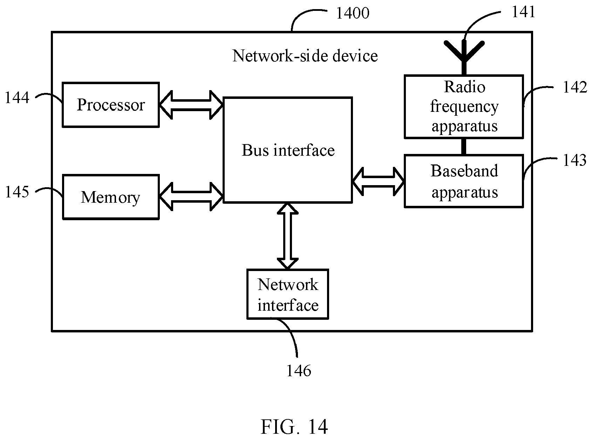

Specifically, an embodiment of this application further provides a network-side device. As shown in FIG. 14, the network-side device 1400 includes an antenna 141, a radio frequency apparatus 142, and a baseband apparatus 143. The antenna 141 is connected to the radio frequency apparatus 142. In an uplink direction, the radio frequency apparatus 142 receives information by using the antenna 141, and transmits the received information to the baseband apparatus 143 for processing. In a downlink direction, the baseband apparatus 143 processes to-be-transmitted information, and transmits the information to the radio frequency apparatus 142; and the radio frequency apparatus 142 processes the received information and then transmits the information by using the antenna 141.

The frequency band processing apparatus may be located in the baseband apparatus 143. The method performed by the network-side device in the foregoing embodiments may be implemented in the baseband apparatus 143, and the baseband apparatus 143 includes a processor 144 and a memory 145.

The baseband apparatus 143 may include, for example, at least one baseband processing unit, where a plurality of chips are disposed on the baseband processing unit. As shown in FIG. 14, one of the chips is, for example, the processor 144, and connected to the memory 145, to invoke a program in the memory 145 to perform the operations of the network-side device shown in the foregoing method embodiment.

The baseband apparatus 143 may further include a network interface 146, configured to exchange information with the radio frequency apparatus 142, where the interface is, for example, a common public radio interface (common public radio interface, CPRI).

Specifically, the network-side device according to the embodiment of this application further includes a program or instructions stored in the memory 145 and executable on the processor 144. The processor 144 invokes the program or instructions in the memory 145 to implement the method performed by each module shown in FIG. 9 or FIG. 11, and the same technical effects are achieved. To avoid repetition, details are not described herein again.

An embodiment of this application further provides a readable storage medium, where the readable storage medium stores a program or instructions, and when the program or instructions are executed by a processor, the processes of the foregoing embodiments of the method for transmitting a service flow through multiple UEs are implemented, with the same technical effects achieved. To avoid repetition, details are not described herein again.

The processor may be a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing embodiments of the method for transmitting a service flow through multiple UEs, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network-side device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for transmitting a service flow through multiple user equipment UEs, comprising:
determining, by a mobility management function, that a first session of a first UE and a second session of a second UE are used for transmission of a same service flow; and
selecting, by the mobility management function, a same session management function for the first session and the second session.

2. The method according to claim 1, wherein the determining, by a mobility management function, that a first session of a first UE and a second session of a second UE are used for transmission of a same service flow comprises:
determining, by the mobility management function, that a first user-plane tunnel of the first session and a second user-plane tunnel of the second session are used for the transmission of the same service flow.

3. The method according to claim 1, wherein the selecting, by the mobility management function, a same session management function for the first session and the second session comprises:
selecting, by the mobility management function, the same session management function for the first session and the second session from session management functions supporting a multi-UE aggregation function; wherein
the multi-UE aggregation function comprises a function of transmitting the same service flow through multiple sessions corresponding to multiple UEs.

4. The method according to any one of claims 1 to 3, wherein the determining, by a mobility management function, that a first session of a first UE and a second session of a second UE are used for transmission of a same service flow comprises:
receiving, by the mobility management function, a second session establishment request message sent by the second UE; and
determining, by the mobility management function, that the first session of the first UE and the second session of the second UE are used for the transmission of the same service flow, based on at least one of following in the second session establishment request message: an identifier of the first UE, an identifier of the first session, and description information of a service flow corresponding to a multi-UE aggregation function.

5. The method according to claim 4, wherein the second session establishment request message further comprises at least one of following:
first indication information, wherein the first indication information is used to indicate that the second session supports the multi-UE aggregation function; and
capability information of the second UE, wherein the capability information of the second UE indicates whether the second UE supports the multi-UE aggregation function.

6. The method according to claim 4, wherein the selecting, by the mobility management function, a same session management function for the first session and the second session comprises:
using, by the mobility management function, a session management function for the first session as a session management function for the second session.

7. The method according to claim 4, wherein the method further comprises:
receiving, by the mobility management function, a first session establishment request message sent by the first UE, wherein the first session establishment request message comprises at least one of following:
second indication information, wherein the second indication information is used to indicate that the first session supports the multi-UE aggregation function; and
capability information of the first UE, wherein the capability information of the first UE indicates whether the first UE supports the multi-UE aggregation function.

8. The method according to claim 1, wherein the method further comprises:
receiving, by the mobility management function, a first session establishment request message sent by the first UE and a second session establishment request message sent by the second UE; wherein
the first session establishment request message comprises a first UE aggregation group identifier, and the second session establishment request message comprises a second UE aggregation group identifier.

9. The method according to claim 8, wherein the determining, by a mobility management function, that a first session of a first UE and a second session of a second UE are used for transmission of a same service flow comprises:
determining, by the mobility management function, that the first session of the first UE and the second session of the second UE are used for the transmission of the same service flow, based on that the first UE aggregation group identifier and the second UE aggregation group identifier are identical.

10. The method according to claim 9, wherein the selecting, by the mobility management function, a same session management function for the first session and the second session comprises:
selecting, by the mobility management function, the same session management function for the first session and the second session based on the second UE aggregation group identifier and a first mapping relationship; wherein
the first mapping relationship comprises a mapping relationship between the first UE aggregation group identifier and a session management function for the first session.

11. The method according to claim 8, wherein the first session establishment request message further comprises first aggregation service flow description information, and the second session establishment request message further comprises second aggregation service flow description information; and
the determining, by a mobility management function, that a first session of a first UE and a second session of a second UE are used for transmission of a same service flow comprises:
determining, by the mobility management function, that the first session of the first UE and the second session of the second UE are used for the transmission of the same service flow, based on that the first UE aggregation group identifier and the second UE aggregation group identifier are identical and that the first aggregation service flow description information and the second aggregation service flow description information are identical.

12. The method according to claim 8, wherein the first session establishment request message and/or the second session establishment request message further comprises at least one of following:
second indication information comprised in the first session establishment request message, wherein the second indication information is used to indicate that the first session supports a multi-UE aggregation function;
first indication information comprised in the second session establishment request message, wherein the first indication information is used to indicate that the second session supports the multi-UE aggregation function;
description information of a service flow corresponding to the multi-UE aggregation function; and
data network name DNN information, wherein the DNN information is used to indicate an identifier of a DNN supporting the multi-UE aggregation function.

13. The method according to claim 1 or 4, wherein the selecting, by the mobility management function, a same session management function for the first session and the second session comprises:
obtaining, by the mobility management function, a session management function for the first session from a data management or storage function; and
using, by the mobility management function, the obtained session management function as a session management function for the second session.

14. A method for transmitting a service flow through multiple UEs, comprising:
sending, by a second UE, a second session establishment request message, wherein the second session establishment request message is used for a mobility management function to determine that a first session of a first UE and a second session of the second UE are used for transmission of a same service flow, and to select a same session management function for the first session and the second session.

15. The method according to claim 14, wherein
the second session establishment request message comprises at least one of following: an identifier of the first UE, an identifier of the first session, description information of a service flow corresponding to a multi-UE aggregation function, and DNN information; or
the second session establishment request message comprises at least one of following: a second UE aggregation group identifier, description information of a service flow corresponding to a multi-UE aggregation function, and DNN information.

16. The method according to claim 14, wherein the method further comprises:
obtaining, by the second UE, at least one of following sent by the first UE: an identifier of the first UE, an identifier of the first session, description information of a service flow corresponding to a multi-UE aggregation function, and DNN information.

17. The method according to claim 15, wherein the second session establishment request message further comprises at least one of following:
first indication information, wherein the first indication information is used to indicate that the second session supports the multi-UE aggregation function; and
capability information of the second UE, wherein the capability information of the second UE indicates whether the second UE supports the multi-UE aggregation function.

18. A method for transmitting a service flow through multiple UEs, comprising:
sending, by a session management function, registration information to a data management or storage function, so that a mobility management function serving a second UE obtains information of the session management function, wherein the session management function corresponds to a first session of a first UE; wherein
the registration information comprises an identifier of the session management function and at least one of following: an identifier of the first UE, an identifier of the first session, a first UE aggregation group identifier, description information of a service flow corresponding to a multi-UE aggregation function, and DNN information.

19. An apparatus for transmitting a service flow through multiple UEs, comprising:
a determining module, configured to determine that a first session of a first UE and a second session of a second UE are used for transmission of a same service flow; and
a selecting module, configured to select a same session management function for the first session and the second session.

20. The apparatus according to claim 19, wherein the determining module is configured to determine that a first user-plane tunnel of the first session and a second user-plane tunnel of the second session are used for the transmission of the same service flow.

21. The apparatus according to claim 19, wherein the selecting module is configured to select the same session management function for the first session and the second session from session management functions supporting a multi-UE aggregation function; wherein
the multi-UE aggregation function comprises a function of transmitting the same service flow through multiple sessions corresponding to multiple UEs.

22. The apparatus according to any one of claims 19 to 21, wherein the determining module is configured to: receive a second session establishment request message sent by the second UE; and determine that the first session of the first UE and the second session of the second UE are used for the transmission of the same service flow, based on at least one of following in the second session establishment request message: an identifier of the first UE, an identifier of the first session, and description information of a service flow corresponding to a multi-UE aggregation function.

23. The apparatus according to claim 22, wherein the second session establishment request message further comprises at least one of following:
first indication information, wherein the first indication information is used to indicate that the second session supports the multi-UE aggregation function; and
capability information of the second UE, wherein the capability information of the second UE indicates whether the second UE supports the multi-UE aggregation function.

24. The apparatus according to claim 22, wherein the selecting module is configured to use a session management function for the first session as a session management function for the second session.

25. The apparatus according to claim 22, wherein the apparatus further comprises a receiving module configured to receive a first session establishment request message sent by the first UE, wherein the first session establishment request message comprises at least one of following:
second indication information, wherein the second indication information is used to indicate that the first session supports the multi-UE aggregation function; and
capability information of the first UE, wherein the capability information of the first UE indicates whether the first UE supports the multi-UE aggregation function.

26. The apparatus according to claim 19, wherein the apparatus further comprises a receiving module configured to receive a first session establishment request message sent by the first UE and a second session establishment request message sent by the second UE; wherein
the first session establishment request message comprises a first UE aggregation group identifier, and the second session establishment request message comprises a second UE aggregation group identifier.

27. The apparatus according to claim 26, wherein the determining module is configured to determine that the first session of the first UE and the second session of the second UE are used for the transmission of the same service flow, based on that the first UE aggregation group identifier and the second UE aggregation group identifier are identical.

28. The apparatus according to claim 27, wherein the selecting module is configured to select the same session management function for the first session and the second session based on the second UE aggregation group identifier and a first mapping relationship; wherein
the first mapping relationship comprises a mapping relationship between the first UE aggregation group identifier and a session management function for the first session.

29. The apparatus according to claim 26, wherein the first session establishment request message further comprises first aggregation service flow description information, and the second session establishment request message further comprises second aggregation service flow description information; and
the determining module is configured to determine that the first session of the first UE and the second session of the second UE are used for the transmission of the same service flow, based on that the first UE aggregation group identifier and the second UE aggregation group identifier are identical and that the first aggregation service flow description information and the second aggregation service flow description information are identical.

30. The apparatus according to claim 26, wherein the first session establishment request message and/or the second session establishment request message further comprises at least one of following:
second indication information comprised in the first session establishment request message, wherein the second indication information is used to indicate that the first session supports a multi-UE aggregation function;
first indication information comprised in the second session establishment request message, wherein the first indication information is used to indicate that the second session supports the multi-UE aggregation function;
description information of a service flow corresponding to the multi-UE aggregation function; and
DNN information, wherein the DNN information is used to indicate an identifier of a DNN supporting the multi-UE aggregation function.

31. The apparatus according to claim 19 or 22, wherein the selecting module is configured to: obtain a session management function for the first session from a data management or storage function; and use the obtained session management function as a session management function for the second session.

32. An apparatus for transmitting a service flow through multiple UEs, comprising:
a sending module, configured to send a second session establishment request message, wherein the second session establishment request message is used for a mobility management function to determine that a first session of a first UE and a second session of the apparatus are used for transmission of a same service flow, and to select a same session management function for the first session and the second session.

33. The apparatus according to claim 32, wherein
the second session establishment request message comprises at least one of following: an identifier of the first UE, an identifier of the first session, description information of a service flow corresponding to a multi-UE aggregation function, and DNN information; or
the second session establishment request message comprises at least one of following: a second UE aggregation group identifier, description information of a service flow corresponding to a multi-UE aggregation function, and DNN information.

34. The apparatus according to claim 32, wherein the apparatus further comprises an obtaining module configured to obtain at least one of following sent by the first UE:
an identifier of the first UE, an identifier of the first session, description information of a service flow corresponding to a multi-UE aggregation function, and DNN information.

35. The apparatus according to claim 33, wherein the second session establishment request message further comprises at least one of following:
first indication information, wherein the first indication information is used to indicate that the second session supports the multi-UE aggregation function; and
capability information of the apparatus, wherein the capability information of the apparatus indicates whether the apparatus supports the multi-UE aggregation function.

36. An apparatus for transmitting a service flow through multiple UEs, comprising:
a sending module, configured to send registration information to a data management or storage function, so that a mobility management function serving a second UE obtains information of the apparatus, wherein the apparatus corresponds to a first session of a first UE; wherein
the registration information comprises an identifier of the apparatus and at least one of following: an identifier of the first UE, an identifier of the first session, a first UE aggregation group identifier, description information of a service flow corresponding to a multi-UE aggregation function, and DNN information.

37. A terminal, comprising a processor, a memory, and a program or instructions stored in the memory and executable on the processor, wherein when the program or instructions are executed by the processor, the method for transmitting a service flow through multiple UEs according to any one of claims 14 to 17 is implemented.

38. A network-side device, comprising a processor, a memory, and a program or instructions stored in the memory and executable on the processor, wherein when the program or instructions are executed by the processor, the method for transmitting a service flow through multiple UEs according to any one of claims 1 to 13 is implemented or the method for transmitting a service flow through multiple UEs according to claim 18 is implemented.

39. A readable storage medium, wherein the readable storage medium stores a program or instructions, and when the program or instructions are executed by a processor, the method for transmitting a service flow through multiple UEs according to any one of claims 1 to 18 is implemented.
